# EUROPÄISCHE PATENTSCHRIFT

(11) **EP 2 108 868 B1**
(45) Veröffentlichungstag und Bekanntmachung des Hinweises auf die Patenterteilung: **02.03.2011**
(21) Anmeldenummer: 09151013.1
(22) Anmeldetag: 21.01.2009
(51) Int. Cl.: F16K 5/06

(54) **Absperrhahn für den Installationsbereich**
Installation stopcock
Robinet d'arrêt pour le domaine d'installation

(30) Priorität: 10.04.2008 DE 102008018507
(43) Veröffentlichungstag der Anmeldung: 14.10.2009
(73) Patentinhaber: Viega GmbH & Co. KG, 57439 Attendorn (DE)
(72) Erfinder: Hartung, Karl-Heinz, 57439, Attendorn (DE)
(74) Vertreter: Cohausz & Florack

(56) Entgegenhaltungen:
- EP-A- 0 222 314
- DE-A1- 2 365 926
- DE-A1- 19 500 475
- FR-A- 1 171 525
- GB-A- 926 750
- GB-A- 1 067 419
- US-A- 3 961 405
- US-A- 3 966 119
- US-B1- 6 173 940
- US-B1- 6 899 599

## Beschreibung

Die vorliegende Erfindung betrifft einen Absperrhahn für den Installationsbereich zum Absperren einer von einem Fluid durchströmbaren Leitung, mit mindestens zwei ein Gehäuse bildenden Anschlussstutzen, die im montierten Zustand einen Strömungsweg definieren, und mit einem in dem Gehäuse drehbar angeordneten Absperrkörper mit mindestens zwei Absperrabschnitten, wobei der Absperrkörper zwischen einer Schließstellung, in der mindestens einer der Absperrabschnitte des Absperrkörpers den Strömungsweg blockiert, und einer Offenstellung, in der beide Absperrabschnitte den Strömungsweg freigeben, bewegbar ist.

Ein Absperrhahn der zuvor genannten Art, insbesondere ein Kugel-, Zylinder- oder Kegelhahn ist seit langem bekannt und wird in vielfältigen technischen Anwendungen in verschiedenen Baugrößen eingesetzt. Es sind zwei- und mehrkanalige Absperrhähne bekannt.

Das Gehäuse des Absperrhahns ist in der Regel aus zwei miteinander verschraubten und verklebten Anschlussstutzen zusammengesetzt. Die Anschlussstutzen dienen zum Anschluss des Absperrhahns an eine Leitung, die von einem Fluid durchströmt wird. Die Verbindung der Leitungsabschnitte an die Anschlussstutzen kann durch Anschrauben, Anschweißen oder Verpressen erfolgen.

Durch ein Betätigungselement, das beispielsweise mechanisch, elektrisch, pneumatisch, elektromagnetisch oder hydraulisch angetrieben sein kann, wird ein Absperrkörper innerhalb des Gehäuses des Absperrhahns senkrecht zum Strömungsweg gedreht. Der Absperrkörper verschließt in der Schließstellung des Absperrhahns mit einem seiner Abschnitte den Strömungskanal, indem der Absperrabschnitt den Strömungsweg blockiert. Durch Drehen des Absperrkörpers über das Betätigungselement in eine Offenstellung geben die Absperrabschnitte des Absperrkörpers den Strömungsweg frei.

Der Absperrkörper kann kugel-, kugel- oder zylinderförmig ausgebildet sein und besteht aus einem Körper aus Vollmaterial, im Falle eines kegelförmigen Absperrkörpers, also aus einer Vollkugel, mit einer Durchlassbohrung.

Der Vollkörper wird dabei auf einer Drehbank aus einem Rohling gedreht, üblicherweise einem Zylinder, dessen Durchmesser mindestens dem späteren Durchmesser an der breitesten Stelle des zu fertigenden Vollkörpers, also beispielsweise dem Durchmesser der Vollkugel, entspricht. Ein relativ großer Teil des Rohlings muss also abgedreht werden, was zu einem erhöhten Herstellungsaufwand führt. Hinzu kommt der zusätzliche Aufwand zur Herstellung der Durchlassbohrung.

Aus der GB 926 750 A ist Absperrhahn für den Installationsbereich zum Absperren einer von einem Fluid durchströmbaren Leitung, mit zwei ein Gehäuse bildenden Anschlussstutzen, die im montierten Zustand einen Strömungsweg definieren, und einem in dem Gehäuse drehbar angeordneten Absperrkörper mit mindestens zwei Absperrabschnitten, wobei der Absperrkörper zwischen einer Schließstellung, in der mindestens einer der Absperrabschnitte des Absperrkörpers den Strömungsweg blockiert, und einer Offenstellung, in der beide Absperrabschnitte den Strömungsweg freigeben, bewegbar ist, wobei der Absperrkörper von einem Blechumformteil gebildet ist. Ein solcher Absperrhahn ist ebenso aus der DE 195 00 475 A1 bekannt.

Darüber hinaus zeigt die US 6,173,940 B1 einen Kugelhahn konfiguriert zum Minimieren von Drehräften, die auf die Kugel aufgrund des Fluiddrucks wirken. Hierbei weist der Kugelhahn eine hohle Kugel und zurückgesetzte Bereiche der Kugelaußenfläche auf, welche einen Fluidfluss nach dem Kugeläußeren ermöglichen, wenn der Kugelhahn teilweise geöffnet ist.

Aus der 6,899,599 B1 ist ein Herstellungsverfahren zur Produktion eines Kugelhahns bekannt, welches eine schnelle und präzise Formgebung des Kugelhahns erlaubt.

Schließlich offenbart die EP 0 222 314 A2 ein Absperrorgan mit mindestens einem rohrförmigen Gehäuseendteil, in das ein Anschlussstück eingesetzt ist, wobei das Anschlussstück in das dünnwandig ausgebildete Gehäuseendteil eingepresst ist, wobei die Wand des Gehäuseendteils im Einsatzbereich über den gesamten Umfang plastisch verformt ist.

Es ist daher die Aufgabe der vorliegenden Erfindung, einen Absperrhahn zu schaffen, der einen reduzierten Herstellungsaufwand gewährleistet.

Die zuvor hergeleitete und aufgezeigte Aufgabe wird gemäß einer ersten Lehre der vorliegenden Erfindung bei einem Absperrhahn der eingangs beschriebenen Art dadurch gelöst, dass das Anschlagstück (10, 10') von einem hakenförmigen Blechabschnitt (12,12') gebildet wird.

Die zuvor hergeleitete und aufgezeigte Aufgabe wird gemäß einer zweiten Lehre der vorliegenden Erfindung bei einem Absperrhahn der eingangs beschriebenen Art dadurch gelöst, dass das Anschlaggegenstück (11, 11') von einem vorspringenden, insbesondere bolzenförmigen, Gehäuseabschnitt (13,13') gebildet wird.

Indem ein Blechumformteil anstelle eines Vollkörpers, beispielsweise anstelle einer Vollkugel, eingesetzt wird, entfällt der hohe Aufwand für die spanende Bearbeitung auf der Drehbank. Auch der mit der spanenden Bearbeitung verbundene hohe Materialverbrauch - ein Großteil des Rohlings wird abgedreht und ist ungenutzter Abfall - entfällt, da erfindungsgemäß zur Herstellung des Absperrkörpers nur noch aus einem Rohblech ein Blechteil, welches zumindest abschnittsweise dem späteren Absperrkörper entspricht, ausgestanzt und umgeformt wird. Dabei kann das Stanzen und Umformen nacheinander oder vorzugsweise sogar in einem einzigen Arbeitsschritt erfolgen. Außerdem ist besagtes Blechumformteil naturgemäß bereits von vorne herein hohl, so dass entweder bei geeigneter Formgebung der ausgestanzten und umgeformten Blechteile mit einer entsprechenden Aussparung überhaupt keine Durchlassbohrung hergestellt werden muss oder im Falle der nachträglichen Herstellung die Durchlassbohrung wesentlich einfacher erzeugt werden kann. Die Herstellung des Absperrkörpers als Blechumformteil ist damit weniger aufwendig als die Herstellung aus einem Vollkörper.

Ein weiterer Vorteil eines von einem Blechumformteil gebildeten Absperrkörpers ist, dass eine zusätzliche Oberflächenbeschichtung entfallen kann. Bei einem Vollkörper, zum Beispiel einer Vollkugel, ist es durch die spanende Fertigung nachher immer noch zusätzlich notwendig, die Oberfläche nachzubearbeiten, beispielsweise zu polieren oder oberflächenzubeschichten, um eine ausreichende Dichtwirkung und optimale Schaltergebnisse zu erreichen.

Gemäß der Erfindung ist der Absperrkörper mit mindestens einer Drehwegbegrenzungseinrichtung versehen. Die Drehwegbegrenzungseinrichtung gibt dem Benutzer bei der Betätigung des Absperrhahns, also beim Verdrehen des Absperrkörpers, die Schließstellung und/oder die Offenstellung exakt vor. Dabei ist erfindungsgemäß die Drehwegbegrenzungseinrichtung erstmalig Bestandteil des Absperrkörpers und ist nicht mehr, wie bisher im Stand der Technik üblich, durch Anschläge außen am Gehäuse angepresst oder angegossen. Die außen am Gehäuse angeformten Anschläge haben bisher den Arbeitsaufwand bei der Herstellung des Absperrhahns zusätzlich erhöht und bargen außerdem das Risiko einer Beschädigung der Drehwegbegrenzungseinrichtung, da die Anschläge ungeschützt waren.

Die Drehwegbegrenzungseinrichtung weist ein am Absperrkörper angeordnetes Anschlagstück und ein damit zusammenwirkendes, den Drehweg des Absperrkörpers begrenzendes und im Gehäuse angeordnetes Anschlaggegenstück auf. Dabei kann das Anschlagstück und/oder das Anschlaggegenstück einstückig mit dem Absperrkörper bzw. dem Gehäuse ausgebildet, kann aber auch angeformt werden. Insbesondere ist es denkbar, dass das Anschlagstück von einem hakenförmigen Blechabschnitt gebildet wird, der vorzugsweise integraler Bestandteil des Absperrkörpers ist, also einstückig mit dem übrigen Blechumformteil ausgeführt ist. Dieses Anschlagstück kann beispielsweise Bestandteil eines abgeflachten Abschnitts sein und durch eine oder mehrere Ausnehmungen in diesem Teil des Absperrkörpers gebildet sein. Das Anschlaggegenstück kann von einem vorspringenden, insbesondere bolzenförmigen Gehäuseabschnitt gebildet sein, der vorzugsweise integraler Bestandteil des Gehäuses ist, also damit einstückig ausgeführt ist. Dabei kann der vorspringende bzw. bolzenförmige Gehäuseabschnitt innenseitig an der Gehäusewand gegenüber der im Gehäuse für das Betätigungselement vorgesehenen Öffnung angeordnet sein. Das Anschlaggegenstück kann auch ein nachträglich angeformter Bolzen oder sonstiger Vorsprung sein, der im Gehäuse positioniert sein kann.

Das beschriebene Anschlagstück, insbesondere der hakenförmige Blechabschnitt, des Absperrkörpers dient aber nicht nur zur Drehwegbegrenzung. In der Schließstellung wird ferner durch den Kontakt des Anschlagstücks mit dem Anschlaggegenstück, insbesondere dem bolzenförmigen Gehäuseabschnitt, ein erhöhter Druck vom Absperrkörper auf die Dichtungen im Gehäuse erzeugt. Dieser optimierte Druck garantiert auch langfristig die Dichtheit in Schließstellung.

Gemäß einer Ausgestaltung des erfindungsgemäßen Absperrhahns ist das Blechumformteil ein zumindest abschnittsweise kugel-, kegel- oder zylinderförmiges Bauteil, wobei die Absperrabschnitte vorzugsweise vollständig gebogen sind. Mit anderen Worten kann aus einem Rohblech jede gängige Absperrkörperform erzeugt werden. Im Falle einer Kugel als Absperrkörper sind dann die Absperrabschnitte, die die Anschlussstutzen schließen und damit den Strömungsweg blockieren, um die vom Fluid durchdströmbare Leitung abzusperren, sphärisch um einen Punkt gebogen. Im Falle eines Zylinders als Absperrkörper sind die Absperrabschnitte zylindrisch und im Falle eines Kegels konisch um eine Achse gebogen. Die gebogenen Absperrabschnitte gewährleisten, dass bei der Drehung des Absperrkörpers zwischen der Schließstellung und der Offenstellung die Absperrabschnitte gleichmäßig innenseitig an den Anschlussstutzen bzw. entsprechend angeordneten Dichtungen zur Anlage kommen.

Gemäß einer vorteilhaften Ausgestaltung des Absperrhahns ist das Blechumformteil eine Kugel mit mindestens einem abgeflachten Abschnitt, insbesondere mit mindestens zwei abgeflachten Abschnitten, die einander vorzugsweise gegenüberliegend angeordnet sind. Einer der abgeflachten Abschnitte kann quer zur Rotationsachse des Absperrkörpers verlaufen und eine Ausnehmung aufweisen, in die ein Betätigungselement zur Herstellung einer drehfesten Verbindung mit dem Absperrkörper eingreift. Mit einem solchen Betätigungselement kann dann der Absperrkörper zwischen der Schließstellung und der Offenstellung verstellt werden. Ein anderer abgeflachter Abschnitt, der dem ersten abgeflachten Abschnitt gegenüberliegen kann und vorzugsweise ebenfalls quer zur Rotationsachse des Absperrkörpers verläuft, kann als Teil einer Drehwegbegrenzungseinrichtung verwendet werden, die im folgenden noch näher beschrieben wird. Dazu kann der abgeflachte Abschnitt ebenfalls eine oder ggf. mehrere Aussparungen aufweisen.

Bei dem Blechumformteil ist gemäß wiederum einer weiteren Ausgestaltung des erfindungsgemäßen Absperrhahns die Wandstärke zumindest der Absperrabschnitte, insbesondere des gesamten Blechumformteils, gleichmäßig. Dadurch erfolgt einerseits eine gleichmäßige Druckverteilung innerhalb des Blechumformteils, insbesondere innerhalb der Absperrabschnitte, in der Schließstellung, wenn der maximale Fluiddruck auf den Absperrkörper wirkt. Andererseits wird in Offenstellung eine optimale Durchströmung des Absperrkörpers gewährleistet.

Wie erwähnt kann das den Absperrkörper bildende Blechumformteil ein durch Stanzen und Umformen, beispielsweise Biegen, hergestelltes Bauteil sein. Es ist beispielsweise denkbar, eine Kugel als Blech-, Stanz- und Biegeteil in einem Folgewerkzeug herzustellen. Dabei ist es denkbar, das Blechumformteil aus einem einzigen Rohblech oder aus mehreren durch Stanzen und Biegen hergestellten Formteilen herzustellen bzw. zusammenzusetzen. Insbesondere können zwei Formteile, die jeweils eine Hälfte des Blechumformteils bilden, zu einem Absperrkörper zusammengesetzt sein.

Es ist auch denkbar, dass mehrere Drehwegbegrenzungseinrichtungen vorgesehen sind, wobei entsprechend mehrere Anschlagstücke mit entsprechenden Anschlaggegenstücken zusammenwirken. Bei der Verwendung mehrerer Drehwegbegrenzungseinrichtungen sind diese vorzugsweise symmetrisch, insbesondere rotationssymmetrisch zur Rotationsachse des Absperrkörpers im Gehäuse des Absperrhahns angeordnet.

Damit in der Offenstellung die Fluidströmung möglichst gleichmäßig durch den Absperrhahn verläuft, ragt gemäß einer weiteren Ausgestaltung das Anschlagstück und/oder das Anschlaggegenstück nicht in den Strömungsweg, ist also vorzugsweise so in das Gehäuse bzw. in das Blechumformteil integriert, dass es nicht über die innere Oberfläche des Blechumformteils hinausragt.

Gemäß noch einer weiteren Ausgestaltung des erfindungsgemäßen Absperrhahns sind die Anschlussstutzen ineinander gesteckt und in einem überlappenden Bereich, insbesondere durch Kaltumformen, verpresst. Zwar ist es grundsätzlich auch denkbar, die Anschlussstutzen miteinander zu verschrauben und/oder zu verkleben, wobei allerdings das Verpressen den Herstellungsaufwand und auch die Materialkosten deutlich reduziert. Die erforderliche Dichtigkeit zwischen den beiden Anschlussstutzen im überlappenden Bereich kann durch ein in diesem Bereich angeordnetes Dichtelement, beispielsweise einen Dichtring, vorzugsweise einen O-Ring, bewerkstelligt werden.

Ferner kann das Blechumformteil aus mehreren durch Stanzen und Biegen hergestellten Formteilen zusammengesetzt sein. Dabei kann die Drehwegbegrenzungseinrichtung vorteilhafterweise so ausgebildet sein, wie dies zuvor detailliert beschrieben wurde.

Ein Absperrhahn für den Installationsbereich mit einer solchen Drehwegbegrenzungseinrichtung führt zu einem deutlich reduzierten Herstellungsaufwand, da die Drehwegbegrenzungseinrichtung direkt in den Absperrkörper integriert ist und nicht gesondert in einem separaten Verfahrensschritt außen am Gehäuse angeformt werden muss. Außerdem ist die Drehwegbegrenzungseinrichtung durch ihre Anordnung im Innern des Gehäuses des Absperrhahns besser geschützt.

Darüber hinaus können die Anschlussstutzen ineinander gesteckt und in einem überlappenden Bereich, insbesondere durch Kaltumformen, verpresst sein. Dabei ist in dem überlappenden Bereich zwischen den ineinandergesteckten Anschlussstutzen insbesondere ein Dichtelement, vorzugsweise ein Dichtring, beispielsweise ein O-Ring angeordnet.

Ein solcher Absperrhahn führt zu einem reduzierten Herstellungsaufwand, da einerseits auf die Verwendung eines teuren Klebers, der außerdem in einem separaten Arbeitsschritt appliziert werden muss, verzichtet werden kann. Auch muss an der Verbindungsstelle der beiden Anschlussstutzen, also im überlappenden Bereich, kein Gewinde vorgesehen werden, was ebenfalls einen separaten Arbeitsschritt erfordern würde.

Es gibt nun eine Vielzahl von Möglichkeiten, den erfindungsgemäßen Absperrhahn auszugestalten und weiterzubilden. Hierzu wird einerseits verwiesen auf die dem Patentanspruch 1 nachgeordneten Patentansprüche, andererseits auf die Beschreibung eines Ausführungsbeispiels in Verbindung mit der Zeichnung.

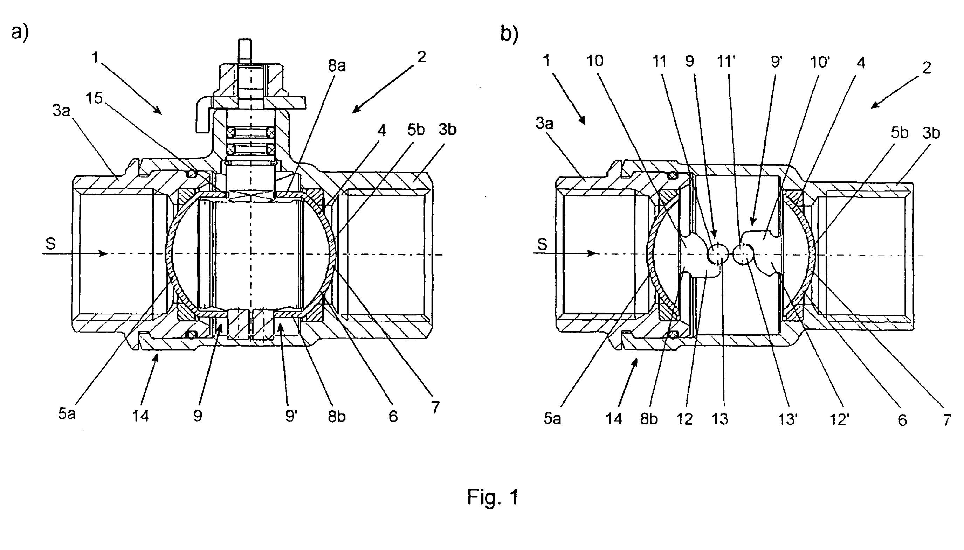

In der Zeichnung zeigt Fig. 1 einen Absperrhahn 1 für den Installationsbereich zum Absperren einer von einem Fluid durchströmbaren Leitung (nicht dargestellt). Der Absperrhahn 1 weist ein Gehäuse 2 auf, welches von zwei Anschlussstutzen 3a und 3b gebildet wird, die im vorliegenden Ausführungsbeispiel durch Kaltumformen in einem überlappenden Bereich 14 miteinander verpresst sind. Ein Dichtring 15 in Form eines O-Rings dient zur Abdichtung des Inneren gegenüber der Umgebung.

Im Gehäuse 2 ist ein Absperrkörper 4 drehbar angeordnet, der zwei Absperrabschnitte 5a und 5b aufweist. Der Absperrkörper 4 ist zwischen einer Schließstellung, die in Fig. 1 dargestellt ist und in der die Absperrabschnitte 5a und 5b den Strömungsweg S blockieren, und einer nicht dargestellten Offenstellung, in der beide Absperrabschnitte 5a und 5b den Strömungsweg freigeben, bewegbar.

Der Absperrkörper 4 ist im vorliegenden Fall von einem Blechumformteil 6 gebildet, nämlich einer Kugel 7 mit zwei einander gegenüberliegenden abgeflachten Abschnitten 8a und 8b. Das Blechumformteil 6 ist ein durch Stanzen und Biegen hergestelltes Bauteil mit einer gleichmäßigen Wandstärke. Die abgeflachten Abschnitte sind dabei deutlich in Fig. 1a) zu erkennen.

Der in Fig. 1a) oben dargestellte abgeflachte Abschnitt 8a weist eine Aussparung 15 auf, in die ein Betätigungselement drehfest eingreift, über das der Absperrkörper 4 von der dargestellten Schließstellung in die nicht dargestellte Offenstellung gedreht werden kann.

Der in Fig. 1a) unten dargestellte abgeflachte Abschnitt 8b ist Bestandteil zweier im unteren Teil des Absperrhahns 1 angeordneter Drehwegbegrenzungseinrichtungen 9 und 9', die im Folgenden anhand von Fig. 1b) beschrieben werden.

Fig. 1b) zeigt einen um 90° um die Längsachse gegenüber Fig. 1a) gedrehten Querschnitt durch den Absperrhahn 1. In dieser Ansicht ist die Ausbildung des unteren abgeflachten Abschnitts 8b des Blechumformteils 6 dargestellt. Der abgeflachte Abschnitt 8b bildet zwei zur Drehachse des Absperrkörpers 4 rotationssymmetrisch angeordnete Anschlagstücke 10 und 10' in Form von hakenförmigen Blechabschnitten 12 und 12'. Mit den Anschlagstücken 10 und 10' wirken zwei Anschlaggegenstücke 11 und 11' in Form von vorspringenden, bolzenförmigen Gehäuseabschnitten 13 und 13' derart zusammen, dass der Drehweg um die Drehachse des Absperrkörpers 4 begrenzt wird.

Neben einer Drehwegbegrenzung bewirken die hakenförmigen Blechabschnitte 12 und 12' auch eine Erhöhung der Dichtwirkung in der Schließstellung. So wird in der Schließstellung durch den Kontakt der hakenförmigen Blechabschnitte 12 und 12' mit den bolzenförmigen Gehäuseabschnitten 13 und 13' ein optimaler Druck vom Absperrkörper auf die Dichtungen erzeugt. Dieser garantiert die Dichtheit in der Schließstellung. In der Offenstellung ist der Druck auf die Dichtungen nicht zwingend notwendig, so dass die hakenförmigen Blechabschnitte 12 und 12' in diesem Fall nur der Drehwegbegrenzung dienen.

Die beiden hakenförmigen Blechabschnitte 12 und 12' sind integraler Bestandteil des Blechumformteils 6 und wurden bei der Herstellung des Blechumformteils 6 ebenfalls durch Stanzen und Biegen hergestellt. Die bolzenförmigen Gehäuseabschnitte 13 und 13' wurden nach der Herstellung des Anschlussstutzens 3b im Innern desselben angeschweißt.

Wird der Absperrkörper 4 von der in Fig. 1b) von oben gezeigten Schließstellung gegen den Uhrzeigersinn gedreht, so löst sich zunächst das jeweilige Anschlagstück 10 bzw. 10' vom jeweiligen Anschlaggegenstück 11 bzw. 11'. Wird der Absperrkörper 4 noch weiter bis hin zur Offenstellung gedreht, so stößt das jeweilige Anschlagstück 10 bzw. 10' an das jeweils andere Anschlaggegenstück 11 bzw. 11', wodurch die optimale Offenstellung definiert wird. Es ist also eine Drehwegbegrenzungseinrichtung zur Definierung der Schließstellung und eine Drehwegbegrenzungseinrichtung zur Definierung der Offenstellung mit einfachen Mitteln im Innern des Gehäuses 2 des Absperrhahns 1 realisiert.

## Patentansprüche

1. Absperrhahn (1) für den Installationsbereich zum Absperren einer von einem Fluid durchströmbaren Leitung,
- mit mindestens zwei ein Gehäuse (2) bildenden Anschlussstutzen (3a,3b), die im montierten Zustand einen Strömungsweg (S) definieren, und
- mit einem in dem Gehäuse (2) drehbar angeordneten Absperrkörper (4) mit mindestens zwei Absperrabschnitten (5a,5b),
wobei der Absperrkörper (4) zwischen einer Schließstellung, in der mindestens einer der Absperrabschnitte (5a,5b) des Absperrkörpers (4) den Strömungsweg (S) blockiert, und einer Offenstellung, in der beide Absperrabschnitte (5a,5b) den Strömungsweg (S) freigeben, bewegbar ist,
wobei der Absperrkörper (4) von einem Blechumformteil (6) gebildet ist,
wobei der Absperrkörper (4) mit mindestens einer Drehwegbegrenzungseinrichtung (9, 9') versehen ist, wobei die Drehwegbegrenzungseinrichtung (9, 9') ein am Absperrkörper (4) angeordnetes Anschlagstück (10,10') und ein damit zusammenwirkendes, den Drehweg des Absperrkörpers (4) begrenzendes und im Gehäuse (2) angeordnetes Anschlaggegenstück (11, 11') aufweist,
**dadurch gekennzeichnet, dass** das Anschlagstück (10,10') von einem hakenförmigen Blechabschnitt (12,12') gebildet wird.

2. Absperrhahn (1) nach Anspruch 1, **dadurch gekennzeichnet, dass** das Anschlaggegenstück (11,11') von einem vorspringenden, insbesondere bolzenförmigen Gehäuseabschnitt (13,13') gebildet wird.

3. Absperrhahn (1) nach Anspruch 2, **dadurch gekennzeichnet, dass** der hakenförmige Blechabschnitt (12, 12') integraler Bestandteil des Absperrkörpers (4) und/oder der vorspringende Gehäuseabschnitt (13,13') integraler Bestandteil des Gehäuses (2) ist.

4. Absperrhahn (1) für den Installationsbereich zum Absperren einer von einem Fluid durchströmbaren Leitung,
- mit mindestens zwei ein Gehäuse (2) bildenden Anschlussstutzen (3a,3b), die im montierten Zustand einen Strömungsweg (S) definieren, und
- mit einem in dem Gehäuse (2) drehbar angeordneten Absperrkörper (4) mit mindestens zwei Absperrabschnitten (5a,5b),
wobei der Absperrkörper (4) zwischen einer Schließstellung, in der mindestens einer der Absperrabschnitte (5a,5b) des Absperrkörpers (4) den Strömungsweg (S) blockiert, und einer Offenstellung, in der beide Absperrabschnitte (5a,5b) den Strömungsweg (S) freigeben, bewegbar ist,
wobei der Absperrkörper (4) von einem Blechumformteil (6) gebildet ist,
wobei der Absperrkörper (4) mit mindestens einer Drehwegbegrenzungseinrichtung (9, 9') versehen ist, wobei die Drehwegbegrenzungseinrichtung (9, 9') ein am Absperrkörper (4) angeordnetes Anschlagstück (10,10') und ein damit zusammenwirkendes, den Drehweg des Absperrkörpers (4) begrenzendes und im Gehäuse (2) angeordnetes Anschlaggegenstück (11, 11') aufweist,
**dadurch gekennzeichnet, dass** das Anschlaggegenstück (11, 11') von einem vorspringenden, insbesondere bolzenförmigen, Gehäuseabschnitt (13,13') gebildet wird.

5. Absperrhahn (1) nach Anspruch 4, **dadurch gekennzeichnet, dass** das Anschlagstück (10,10') von einem hakenförmigen Blechabschnitt (12, 12') gebildet wird.

6. Absperrhahn (1) nach Anspruch 5, **dadurch gekennzeichnet, dass** der hakenförmige Blechabschnitt (12, 12') integraler Bestandteil des Absperrkörpers (4) und/oder der vorspringende Gehäuseabschnitt (13,13') integraler Bestandteil des Gehäuses (2) ist.

7. Absperrhahn (1) nach einem der vorangehenden Ansprüche **dadurch gekennzeichnet, dass** die Anschlussstutzen (3a,3b) ineinander gesteckt und in einem überlappenden Bereich (14) verpresst sind.

8. Absperrhahn (1) nach einem der vorangehenden Ansprüche, **dadurch gekennzeichnet, dass** das Blechumformteil (6) ein zumindest abschnittsweise kugel-, kegel- oder zylinderförmiges Bauteil ist, wobei die Absperrabschnitte (5a,5b) vorzugsweise vollständig gebogen sind.

9. Absperrhahn (1) nach Anspruch 8, **dadurch gekennzeichnet, dass** das Blechumformteil (6) eine Kugel (7) mit mindestens einem abgeflachten Abschnitt (8a;8b), insbesondere mit mindestens zwei abgeflachten Abschnitten (8a,8b), die einander vorzugsweise gegenüberliegend angeordnet sind, ist.

10. Absperrhahn (1) nach einem der vorangehenden Ansprüche,
**dadurch gekennzeichnet, dass** die Wandstärke zumindest der Absperrabschnitte (5a,5b), insbesondere des gesamten Blechumformteils (6), gleichmäßig ist.

11. Absperrhahn (1) nach einem der vorangehenden Ansprüche,
**dadurch gekennzeichnet, dass** das Blechumformteil (6) ein durch Stanzen und Biegen hergestelltes Bauteil ist.

12. Absperrhahn (1) nach einem der vorangehenden Ansprüche,
**dadurch gekennzeichnet, dass** das Blechumformteil (6) aus mehreren durch Stanzen und Biegen hergestellten Formteilen zusammengesetzt ist.

13. Absperrhahn (1) nach einem der vorangehenden Ansprüche,
**dadurch gekennzeichnet, dass** das Anschlagstück (10,10') und/oder das Anschlaggegenstück (11, 11') nicht in den Strömungsweg (S) ragt.

14. Absperrhahn (1) nach einem der vorangehenden Ansprüche,
**dadurch gekennzeichnet, dass** in dem überlappenden Bereich (14) zwischen den ineinander gesteckten Anschlussstutzen (3a,3b) ein Dichtring (15) angeordnet ist.

## Claims

1. A shut-off cock (1) for plumbing for shutting off tubing, through which a fluid can flow,
- comprising at least two connecting branches (3a, 3b) forming a casing (2), said branches defining a flow path (S) in their assembled condition, and
- comprising a shut-off body (4) arranged rotatably in the casing (2) and having at least two shut-off sections (5a, 5b),
wherein the shut-off body (4) is movable between a shut-off position in which at least one of the shut-off sections (5a, 5b) of the shut-off body (4) blocks the flow path (S), and an open position in which both shut-off sections (5a, 5b) unblock the flow path (S),
wherein the shut-off body (4) is made from a formed sheet metal part (6),
wherein the shut-off body (4) is provided with at least one rotation limiter device (9, 9'), said rotation limiter device (9, 9') comprising a limit stop part (10, 10') arranged at the shut-off body (4) as well as a limit stop counterpart (11, 11') disposed in the casing (2) and co-operating with said limit stop part and limiting the degree of rotation of the shut-off body,
**characterized in that** the limit stop part (10, 10') is formed by a hook-shaped sheet metal section (12, 12').

2. The shut-off cock (1) according to claim 1, **characterized in that** the limit stop counterpart (11, 11') is formed by a protruding casing section (13, 13') which is in particular bolt-shaped.

3. The shut-off cock (1) according to claim 2, **characterized in that** the hook-shaped sheet metal section (12, 12') is an integral component of the shut-off body (4) and/or the protruding casing section (13, 13') is an integral component of the casing (2).

4. A shut-off cock (1) for plumbing for shutting off tubing, through which a fluid can flow,
- comprising at least two connecting branches (3a, 3b) forming a casing (2), said branches defining a flow path (S) in their assembled condition, and
- comprising a shut-off body (4) arranged rotatably in the casing (2) and having at least two shut-off sections (5a, 5b),
wherein the shut-off body (4) is movable between a shut-off position in which at least one of the shut-off sections (5a, 5b) of the shut-off body (4) blocks the flow path (S), and an open position in which both shut-off sections (5a, 5b) unblock the flow path (S),
wherein the shut-off body (4) is made from a formed sheet metal part (6),
wherein the shut-off body (4) is provided with at least one rotation limiter device (9, 9'), said rotation limiter device (9, 9') comprising a limit stop part (10, 10') arranged at the shut-off body (4) as well as a limit stop counterpart (11, 11') disposed in the casing (2) and co-operating with said limit stop part and limiting the degree of rotation of the shut-off body,
**characterized in that** the limit stop counterpart (11, 11') is formed by a protruding casing section (13, 13') which is in particular bolt-shaped.

5. The shut-off cock (1) according to claim 4, **characterized in that** the limit stop part (10, 10') is formed by a hook-shaped sheet metal section (12, 12').

6. The shut-off cock (1) according to claim 5, **characterized in that** the hook-shaped sheet metal section (12, 12') is an integral component of the shut-off body (4) and/or the protruding casing section (13, 13') is an integral component of the casing (2).

7. The shut-off cock (1) according to one of the preceding claims, **characterized in that** the connecting branches (3a, 3b) are inserted into one another and pressed together in an overlapping portion (14).

8. The shut-off cock (1) according to one of the preceding claims, **characterized in that** the formed sheet metal part (6) is a component that is one of spherical, conical and cylindrical, at least in sections, wherein the shut-off sections (5a, 5b) are preferably completely bent.

9. The shut-off cock (1) according to claim 8, **characterized in that** the formed sheet metal part (6) is a ball (7) comprising at least one flattened section (8a,8b), in particular comprising at least two flattened sections (8a,8b) which are preferably arranged opposite to one another.

10. The shut-off cock (1) according to one of the preceding claims, **characterized in that** the wall thickness of at least the shut-off sections (5a, 5b), in particular of the entire formed sheet metal part (6), is constant.

11. The shut-off cock (1) according to one of the preceding claims, **characterized in that** the formed sheet metal part (6) is a component produced through stamping and bending.

12. The shut-off cock (1) according to one of the preceding claims, **characterized in that** the formed sheet metal part (6) ssembled from plural formed components which are produced by means of stamping and bending.

13. The shut-off cock (1) according to one of the preceding claims, **characterized in that** the limit stop part (10, 10') and/or and the limit stop counterpart (11, 11') do not protrude into the flow path (S).

14. The shut-off cock (1) according to one of the preceding claims, **characterized in that** a seal ring (15) is disposed in the overlapping portion (14) between the connecting branches (3a, 3b) inserted into one another.

## Revendications

1. Robinet d'arrêt (1) pour le domaine de l'installation pour fermer une conduite traversée par un liquide,
- avec au moins deux tubulures de raccordement (3a, 3b) formant un carter (2) et qui définissent à l'état monté un trajet d'écoulement (S) et
- avec un corps d'arrêt (4) disposé de manière rotative dans le carter (2) avec au moins deux sections d'arrêt (5a, 5b),
le corps d'arrêt (4) étant mobile entre une position de fermeture dans laquelle au moins l'une des sections d'arrêt (5a, 5b) du corps d'arrêt (4) bloque le trajet d'écoulement (S) et une position d'ouverture dans laquelle les deux sections de d'arrêt (5a, 5b) libèrent le trajet d'écoulement (S),
le corps de d'arrêt (4) étant formé par une pièce façonnée en tôle (6),
le corps d'arrêt (4) étant muni au moins d'un dispositif de limitation de rotation (9, 9'), le dispositif de limitation de rotation (9, 9') présentant une pièce de butée (10, 10') disposée sur le corps d'arrêt (4) et coopérant avec une pièce de contrebutée (11, 11') disposée dans le carter (2) et limitant la rotation du corps d'arrêt (4),
**caractérisé en ce que** la pièce de butée (10, 10') est formée par une section de tôle (12, 12') en forme de crochet.

2. Robinet d'arrêt (1) selon la revendication 1, **caractérisé en ce que** la pièce de contrebutée (11, 11') est formée par une section de carter (13, 13') saillante, en particulier en forme de boulon.

3. Robinet d'arrêt (1) selon la revendication 2, **caractérisé en ce que** la section de tôle (12, 12') en forme de crochet fait partie intégrante du corps d'arrêt (4) et/ou la section de carter (13, 13') saillante fait partie intégrante du carter (2).

4. Robinet d'arrêt (1) pour le domaine de l'installation pour fermer une conduite traversée par un liquide,
- avec au moins deux tubulures de raccordement (3a, 3b) formant un carter (2) et définissent à l'état monté un trajet d'écoulement (S) et
- avec un corps d'arrêt (4) disposé de manière rotative dans le carter (2) avec au moins deux sections d'arrêt (5a, 5b),
le corps d'arrêt (4) étant mobile entre une position de fermeture dans laquelle au moins l'une des sections d'arrêt (5a, 5b) du corps d'arrêt (4) bloque le trajet d'écoulement (S) et une position d'ouverture dans laquelle les deux sections de d'arrêt (5a, 5b) libèrent le trajet d'écoulement (S)
le corps de d'arrêt (4) étant formé par une pièce façonnée en tôle (6),
le corps d'arrêt (4) étant muni au moins d'un dispositif de limitation de rotation (9, 9'), le dispositif de limitation de rotation (9, 9') présentant une pièce de butée (10, 10') disposée sur le corps d'arrêt (4) et coopérant avec une pièce de contrebutée (11, 11') disposée dans le carter (2) et limitant la rotation du corps d'arrêt (4),
**caractérisé en ce que** la pièce de contrebutée (11, 11') est formée par une section de tôle en forme de boulon (13, 13').

5. Robinet d'arrêt (1) selon la revendication 4, **caractérisé en ce que** la pièce de butée (10, 10') est formée par une section de tôle (12, 12') en forme de crochet.

6. Robinet d'arrêt (1) selon la revendication 5, **caractérisé en ce que** la section de tôle (12, 12') en forme de crochet fait partie intégrante du corps d'arrêt (4) et/ou la section de carter (13, 13') saillante fait partie intégrante du carter (2).

7. Robinet d'arrêt (1) selon l'une des revendications précédentes, **caractérisé en ce que** les tubulures de raccordement (3a, 3b) sont emboitées l'une dans l'autre et sont compressées dans une zone de chevauchement (14).

8. Robinet d'arrêt (1) selon l'une des revendications précédentes, **caractérisé en ce que** la pièce façonnée en tôle (6) est un composant de forme sphérique, conique ou cylindrique au moins par section, les sections d'arrêt (5a, 5b) étant de préférence complètement coudées.

9. Robinet d'arrêt (1) selon la revendication 8, **caractérisé en ce que** la pièce façonnée en tôle (6) est une sphère (7) avec au moins une section aplatie (8a;8b) en particulier avec au moins deux sections aplaties (8a, 8b) qui sont disposées de préférence en vis-à-vis.

10. Robinet d'arrêt (1) selon l'une des revendications précédentes, **caractérisé en ce que** l'épaisseur de paroi au moins des sections d'arrêt (5a, 5b), en particulier de l'ensemble de la pièce façonnée en tôle (6), est régulière.

11. Robinet d'arrêt (1) selon l'une des revendications précédentes, **caractérisé en ce que** la pièce façonnée en tôle (6) est un composant fabriqué par poinçonnage et pliage.

12. Robinet d'arrêt (1) selon l'une des revendications précédentes, **caractérisé en ce que** la pièce façonnée en tôle (6) est composée de plusieurs pièces façonnées fabriquées par poinçonnage et pliage.

13. Robinet d'arrêt (1) selon l'une des revendications précédentes, **caractérisé en ce que** la pièce de butée (10, 10') et/ou la pièce de contrebutée (11, 11') ne s'engage pas dans le trajet d'écoulement (S).

14. Robinet d'arrêt (1) selon l'une des revendications précédentes, **caractérisé en ce qu'**il est disposé dans la zone de chevauchement (14) entre les tubulures de raccordement (3a, 3b) emboîtées les unes dans les autres une bague d'étanchéité (15).
